# EUROPEAN PATENT SPECIFICATION

(11) **EP 0 466 314 B1**
(45) Date of publication and mention of the grant of the patent: **15.11.1995**
(21) Application number: 91304835.1
(22) Date of filing: 29.05.1991
(51) Int. Cl.: G07C 1/30, B60R 1/12, G04B 47/02

(54) **Parking time display device**
Parkzeitanzeigevorrichtung
Dispositif d'affichage du temps de stationnement

(30) Priority: 13.07.1990 JP 185517/90
(43) Date of publication of application: 15.01.1992
(73) Proprietor: MORISAWA & COMPANY LTD, Osaka-shi, Osaka (JP); Morisawa, Nobuo, Akashi-shi, Hyogo (JP)
(72) Inventor: Morisawa, Nobuo, Akashi-shi, Hyogo (JP)
(74) Representative: Linn, Samuel Jonathan

(56) References cited:
- EP-A- 0 005 695
- EP-A- 0 297 531
- WO-A-88/08173
- DE-A- 2 613 931
- DE-A- 3 321 177
- GB-A- 2 217 885
- US-A- 3 016 641

## Description

The present invention relates to a parking time display device installed in or on a vehicle to display the parking time of said vehicle.

Among various urban problems, unlawful parking is a serious one because it can often result in congestion and heavy traffic jams, and it has proved difficult to control. Generally it is deemed unlawful to stop or park a car at a given place for a regulated predetermined time. Accordingly, it is important to know how long the car has been stopped or parked at that place to enforce such regulations and in order to control such unlawful parking.

However, one cannot usually determine at a glance whether or not a car has been stopped or parked illegally. Often, one can only tell this at a parking spot provided with a parking meter. However, although a parking meter can indicate that a predetermined parking time has elapsed, it does not serve to control the unlawful parking because payment of an additional parking fee is the only penalty for breaking the law.

DE 3321177A1 (SWF Auto-Electric GmbH) discloses an electronic parking meter unit for mounting in a vehicle. The meter unit includes an LCD numerical display mounted in the vehicle, for example on the instrument panel near the windscreen or at the steering wheel, so as to be visible from outside the vehicle. The display is built into a timer unit containing a counter and a clock generator. The activation of the unit is made when the ignition switch is turned off. EP-A-005695 discloses a parking time indicator integrated in a side mirror of a vehicle.

An object of the present invention is to provide an alternative parking time display device for installation in or on a vehicle and for displaying a parking time of said vehicle.

According to the invention there is provided a parking time display device for a vehicle, comprising first means responsive to a stationary state of said vehicle, second means responsive to said first means to provide elapsed time signals, and display means operated by said elapsed time signals, to show elapsed time, characterised in that the display means are arranged on a number plate of the vehicle so as to be visible from the outside of the vehicle when associated therewith.

An embodiment of the invention provides a device which comprises detection means for detecting that the vehicle is stationary, count means for counting parking time elapsed, and count control means for actuating said count means in response to a signal from said detection means and for enabling said display means to display a parking time counted by said count means.

Embodiments of the present invention provide a display means which allows outside observers to determine the parking time of a parked vehicle at a glance, and preferably a vehicle parking time display device which starts to count the parking time automatically once the vehicle is stopped or parked.

### BRIEF DESCRIPTION OF THE DRAWINGS

Specific implementation for the present invention will be described, by way of example, with reference to the accompanying drawings, in which:
Fig. 1 is a partial perspective view of a car having a rear number plate to which the present invention is applied;
Fig. 2 is a block diagram of a parking time display device for a vehicle according to the present invention.

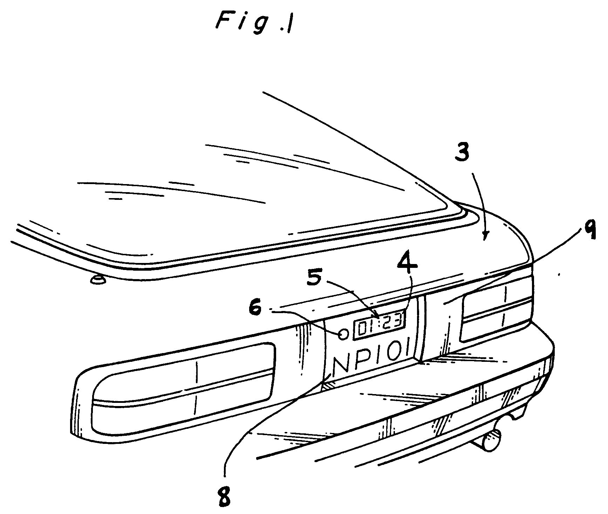

As shown in Fig. 1, a car 3 has a small display window 4 for displaying parking time of the car. Inside the said display window 4, there is provided a digital display means 5 such as a liquid crystal display or the like. In Fig. 1, the display means 5 indicates for instance one hour and 23 minutes as a parking time counted from when the car was stopped or parked. It is convenient to arrange a pilot lamp 6 near the display 5 for indicating that the parking time display device is in operation. In this Figure the display means 5 is arranged on a number plate 8 which is mounted on a rear end panel 9 thereof.

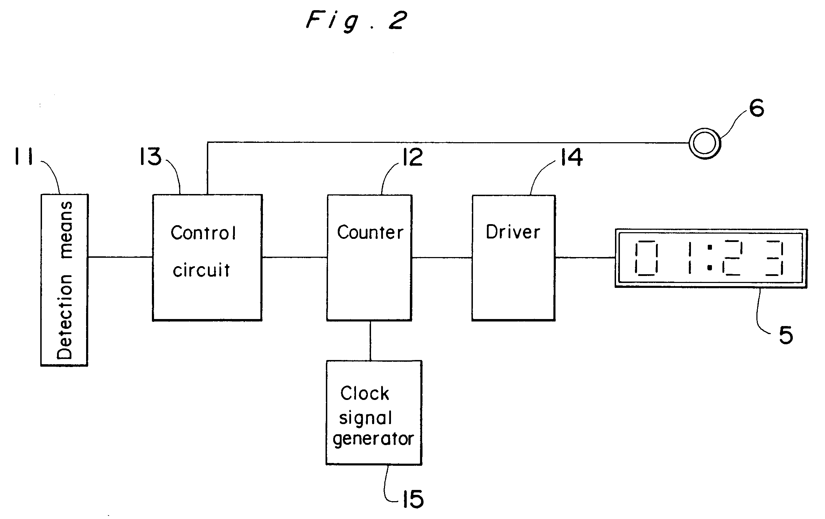

Fig. 2 shows a block diagram of said parking time display device.

It is comprised of a detection means 11 for detecting that the car has been stopped or parked, a counter 12 for counting time, a control circuit 13 for starting and resetting said counter 12, a driver circuit 14 and digital display means 5.

Said detection means 11 can be a switch which is switched on or off when the accelerator of a car is released or a side (parking) brake lever such as a hand brake is operated to park the car. Alternatively, it may be also a switch means which co-operates with the ignition key to detect that the same is in the "off" position. Further, it may be an idle switch which is operated when the car is brought in an idle state.

The control circuit 13 actuates the counter 12 when the detection means 11 detects that the car has stopped or parked. The counter 12, when operating, counts clock pulses generated by a clock signal generator 15. The driver 14 drives the digital display 5 of four digits in accordance with output signals from the counter 12.

The control circuit 13 also controls the pilot lamp 6 to turn it on once the detection means outputs a detection signal.

When the car is moved or restarted and thereby, the detection means 11 is switched off, the control circuit 13 resets the counter 12 and accordingly, the display 4.

No further explanation about compositions of the control circuit 13, the counter 12, the driver 14 and the clock signal generator 15 seems necessary because they are well known to those skilled in the art.

However, it is to be noted that the parking time display device should be backed-up by a battery means (not shown) after the ignition key switch is switched off.

Further, it is to be noted that a microcomputer if equipped, can be utilised to control the parking time display device instead of the control circuit 13.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims.

## Claims

1. A parking time display device for a vehicle, comprising first means (11) responsive to a stationary state of said vehicle, second means (12, 13) responsive to said first means to provide elapsed time signals, and display means (5) operated by said elapsed time signals to show elapsed time, characterised in that the display means are arranged on a number plate of the vehicle so as to be visible from the outside of the vehicle when associated therewith.

2. A device according to Claim 1 which comprises detection means (11) for detecting that the vehicle is stationary, count means (12) for counting parking time elapsed, and count control means (13) for actuating said count means in response to a signal from said detection means (11) and for enabling said display means (5) to display a parking time counted by said count means (12).

3. A device according to Claim 1 or 2 in which said display means is arranged at the rear of the vehicle.

4. A device according to any preceding claim having a lamp (6) for indicating that the device is in operation.

## Patentansprüche

1. Parkzeitanzeigevorrichtung für ein Fahrzeug, mit: einer auf einen stationären Zustand des Fahrzeugs ansprechenden ersten Einrichtung (11), auf die erste Einrichtung ansprechende zweite Einrichtungen (12, 13) zum Erzeugen von die verstrichene Zeit darstellenden Signalen und einer durch die die verstrichene Zeit darstellenden Signale aktivierten Anzeigeeinrichtung (5) zum Darstellen der verstrichenen Zeit, **dadurch gekennzeichnet, daß** die Anzeigeeinrichtung auf einem Nummernschild des Fahrzeugs angeordnet ist, so daß sie von außerhalb des Fahrzeugs sichtbar ist.

2. Vorrichtung nach Anspruch 1, mit: einer Detektoreinrichtung (1) zum Erfassen des stationären Zustands des Fahrzeugs, einer Zähleinrichtung (12) zum Zählen der verstrichenen Parkzeit und einer Zählfunktionssteuerungseinrichtung (13) zum Aktivieren der Zähleinrichtung in Antwort auf ein Signal von der Detektoreinrichtung (11) und zum Aktivieren der Anzeigeeinrichtung (5), so daß diese eine durch die Zähleinrichtung (12) gezählte Parkzeit anzeigt.

3. Vorrichtung nach Anspruch 1 oder 2, wobei die Anzeigeeinrichtung an der Rückseite des Fahrzeugs angeordnet ist.

4. Vorrichtung nach einem der vorangehenden Ansprüche mit einer Lampe (6) zum Anzeigen, daß die Vorrichtung in Betrieb ist.

## Revendications

1. Dispositif d'affichage du temps de stationnement pour un véhicule, comprenant des premiers moyens (11) réagissant à un état stationnaire dudit véhicule, des deuxièmes moyens (12, 13) réagissant auxdits premiers moyens pour fournir des signaux de temps écoulé, et des moyens d'affichage (5) actionnés par lesdits signaux de temps écoulé, pour montrer le temps écoulé, caractérisé en ce que les moyens d'affichage sont agencés sur une plaque d'immatriculation du véhicule, de manière à être visibles de l'extérieur du véhicule lorsqu'ils sont associés à celui-ci.

2. Dispositif selon la revendication 1, qui comprend des moyens de détection (11) pour détecter que le véhicule est stationnaire, des moyens de comptage (12) pour compter le temps de stationnement écoulé, et des moyens de commande de comptage (13) pour actionner lesdits moyens de comptage en réponse à un signal provenant desdits moyens de détection (11) et pour permettre auxdits moyens d'affichage (5) d'afficher un temps de stationnement compté par lesdits moyens de comptage (12).

3. Dispositif selon la revendication 1 ou 2, dans lequel lesdits moyens d'affichage sont placés à l'arrière du véhicule.

4. Dispositif selon l'une quelconque des revendications précédentes, ayant une lampe témoin (6) pour indiquer que le dispositif est en service.
